# EUROPEAN PATENT APPLICATION

(11) **EP 4 645 480 A1**
(43) Date of publication of application: **05.11.2025**
(21) Application number: 23912004.1
(22) Date of filing: 22.12.2023
(51) Int. Cl.: H01M 8/04, C01B 3/34, H01M 8/0606

(54) **FUEL BATTERY MODULE AND FUEL BATTERY DEVICE**

(30) Priority: 28.12.2022 JP 2022212553
(71) Applicant: Kyocera Corporation, Kyoto-shi, Kyoto 612-8501 (JP)
(72) Inventor: SANO, Yoshihide, Kyoto-shi, Kyoto 612-8501 (JP); KAJIHARA, Wataru, Kyoto-shi, Kyoto 612-8501 (JP)
(74) Representative: TBK
(86) International application number: PCT/JP2023/046258
(87) International publication number: WO 2024/143224

(57) **Abstract**

A fuel cell module includes a fuel cell stack (12) and a reformer (13). The reformer (13) is disposed away from the fuel cell stack (12) in a first direction (z-axis direction). A central axis (12C) of the fuel cell stack and a central axis (13C) of the reformer do not coincide with each other in a plan view looking along a line of sight from the reformer (13) toward the fuel cell stack (12) along the first direction (z-axis direction).

## Description

### CROSS-REFERENCE TO RELATED APPLICATIONS

The present application claims priority of Japanese Patent Application No. 2022-212553 (filed December 28, 2022), the entire disclosure of which is hereby incorporated by reference.

### TECHNICAL FIELD

The present disclosure relates to fuel cell modules and fuel cell devices.

### BACKGROUND OF INVENTION

Known fuel cells generate electricity at relatively high temperatures, such as solid electrolyte fuel cells. A process is known in which exhaust heat associated with power generation in a fuel cell that generates electricity at high temperatures is used to heat a reforming section and a vaporization section for performing a steam reforming reaction to generate fuel gas used for power generation. In addition, a reformer has been proposed in which the reforming section and the vaporization section are integrated with each other in order to reduce costs and simplify assembly work (see Patent Literature 1).

### CITATION LIST

### PATENT LITERATURE

Patent Literature 1: Japanese Patent No. 6506856

### SUMMARY

(1) According to an embodiment of the present disclosure, a fuel cell module includes a fuel cell stack and a reformer.

The reformer is disposed away from the fuel cell stack in a first direction.

A central axis of the fuel cell stack and a central axis of the reformer do not coincide with each other in a plan view looking along a line of sight from the reformer toward the fuel cell stack along the first direction.

(2) As an embodiment of the present disclosure, in (1),
the central axis of the fuel cell stack is parallel to a second direction perpendicular to the first direction, and
in the plan view, a width of the reformer in the second direction is greater than a width of the fuel cell stack in the second direction.

(3) As an embodiment of the present disclosure, (1) includes an air introduction plate disposed to face the reformer and the fuel cell stack.

In the plan view, the central axis of the reformer is farther from the air introduction plate than the central axis of the fuel cell stack is.

(4) As an embodiment of the present disclosure, (1) includes an air introduction plate disposed to face the reformer and the fuel cell stack.

In the plan view, the central axis of the reformer is closer to the air introduction plate than the central axis of the fuel cell stack is.

(5) As an embodiment of the present disclosure, (4) includes a flow impeding member that impedes flow of air between the reformer, the fuel cell stack, and the air introduction plate.

(6) As an embodiment of the present disclosure, in (1),
the central axis of the fuel cell stack is parallel to a second direction parallel to the first direction.

In the plan view, the central axis of the reformer is inclined toward a third direction with respect to the central axis of the fuel cell stack. The third direction is perpendicular to the first direction and the second direction.

(7) As an embodiment of the present disclosure, (6) includes an air introduction plate disposed to face the reformer and the fuel cell stack.

The reformer includes a vaporization section to which water and raw fuel gas are supplied, and a reforming section in which a steam reforming reaction is performed.

In the plan view, an intersection point between the central axis of the reformer and the central axis of the fuel cell stack is contained in the vaporization section, and most of the central axis of the reformer is farther from the air introduction plate than the central axis of the fuel cell stack is.

(8) As an embodiment of the present disclosure, (6) includes an air introduction plate disposed to face the reformer and the fuel cell stack.

The reformer includes a vaporization section to which water and raw fuel gas are supplied, and a reforming section in which a steam reforming reaction is performed.

In the plan view, an intersection point between the central axis of the reformer and the central axis of the fuel cell stack is contained in the reforming section, and most of the central axis of the reformer is farther from the air introduction plate than the central axis of the fuel cell stack is.

(9) As an embodiment of the present disclosure, (6) includes an air introduction plate disposed to face the reformer and the fuel cell stack.

The reformer includes a vaporization section to which water and raw fuel gas are supplied, and a reforming section in which a steam reforming reaction is performed.

In the plan view, an intersection point between the central axis of the reformer and the central axis of the fuel cell stack is contained in the vaporization section, and most of the central axis of the reformer is closer to the air introduction plate than the central axis of the fuel cell stack is.

(10) As an embodiment of the present disclosure, (6) includes an air introduction plate disposed to face the reformer and the fuel cell stack.

The reformer includes a vaporization section to which water and raw fuel gas are supplied, and a reforming section in which a steam reforming reaction is performed.

In the plan view, an intersection point between the central axis of the reformer and the central axis of the fuel cell stack is contained in the reforming section, and most of the central axis of the reformer is closer to the air introduction plate than the central axis of the fuel cell stack is.

(11) In an embodiment of the present disclosure, a fuel cell device includes the fuel cell module of any one of (1) to (10) and an auxiliary device having an auxiliary function for operating the fuel cell module.

### BRIEF DESCRIPTION OF THE DRAWINGS

FIG. 1 is a schematic configuration diagram of a fuel cell module according to an embodiment of the present disclosure.
FIG. 2 is a top view of a reformer.
FIG. 3 is a diagram illustrating an example of the position of a reformer relative to a fuel cell stack.
FIG. 4 is a diagram illustrating an example of the position of the reformer relative to the fuel cell stack.
FIG. 5 is a diagram illustrating an example of setting the width of the reformer.
FIG. 6 is a diagram illustrating an example of the position of the reformer relative to the fuel cell stack.
FIG. 7 is a diagram illustrating an example of the position of a reformer relative to a fuel cell stack.
FIG. 8 is a diagram illustrating an example of the position of the reformer relative to the fuel cell stack.
FIG. 9 is a diagram illustrating an example of the position of the reformer relative to the fuel cell stack.
FIG. 10 is a diagram illustrating an example of the position of the reformer relative to the fuel cell stack.
FIG. 11 is a diagram illustrating an example of the position of the reformer relative to the fuel cell stack.

### DESCRIPTION OF EMBODIMENTS

Hereinafter, a fuel cell module and a fuel cell device according to embodiments of the present disclosure will be described with reference to the drawings. In the drawings, the same or corresponding parts are assigned the same reference symbols. In the following description of embodiments, the description of the same or corresponding parts will be omitted or simplified as appropriate. In addition, the drawings are schematic drawings.

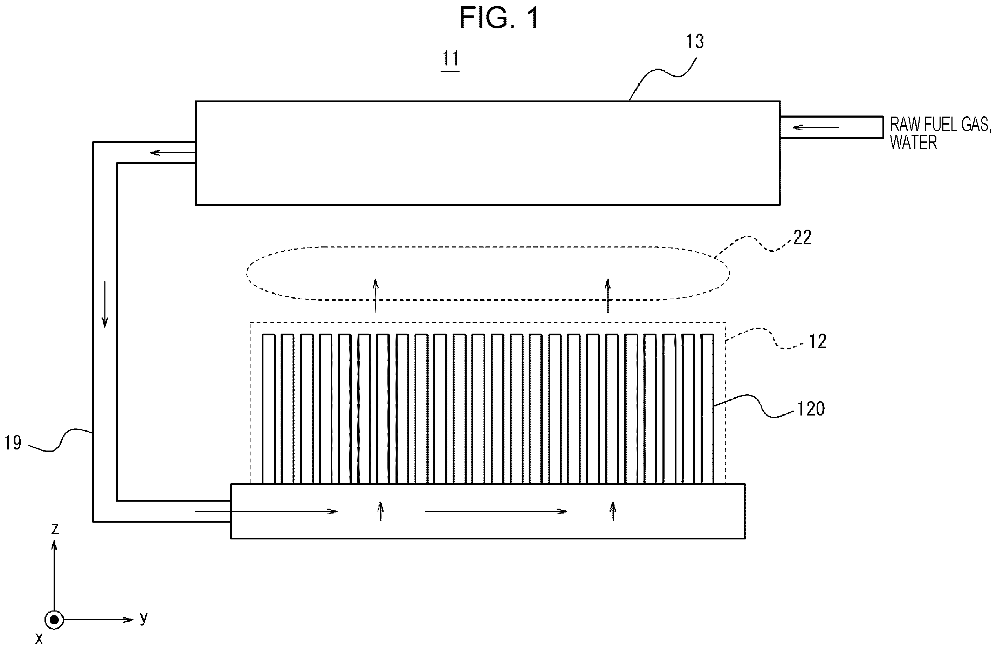

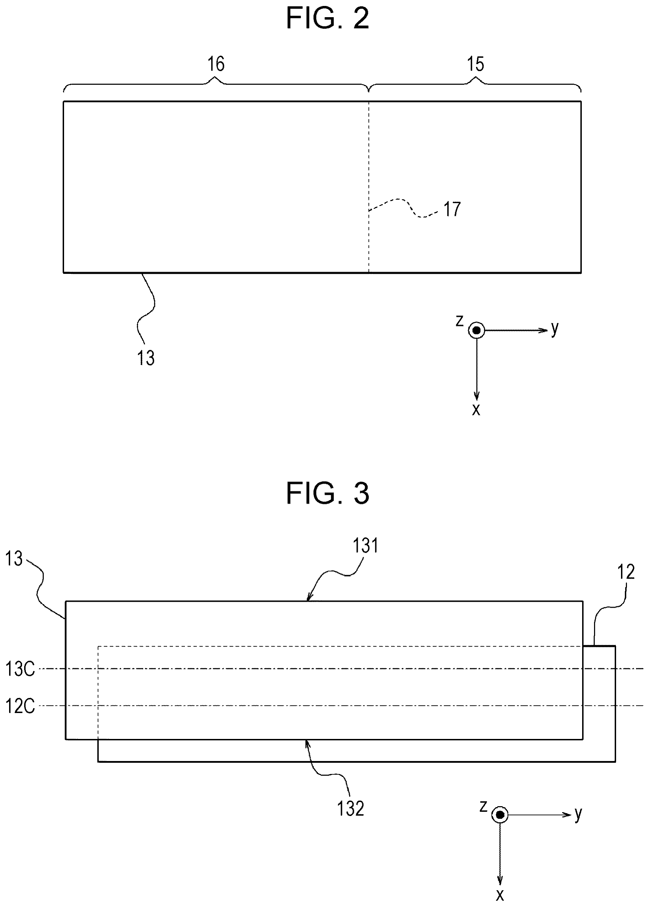

FIG. 1 is a schematic configuration diagram of a fuel cell module 11 according to this embodiment. The fuel cell module 11 includes at least a fuel cell stack 12 and a reformer 13. The reformer 13 is disposed away from the fuel cell stack 12 in a first direction. A common orthogonal coordinate system is set in FIG. 1 and in FIGs. 2 to 11 described later. The orthogonal coordinate system is set so as to correspond to each side of the rectangular parallelepiped shape of the fuel cell stack 12. The z-axis direction corresponds to the first direction. In this embodiment, the reformer 13 is disposed above the fuel cell stack 12 so that heat from the fuel cell stack 12 rises and heats the reformer 13. Therefore, the z-axis direction (first direction) may be referred to as an up-down direction. In addition, the positive z-axis direction may be referred to as an up direction, and the negative z-axis direction may be referred to as a down direction. In addition, the x-axis direction and the y-axis direction are directions that are perpendicular to the z-axis, and the y-axis direction corresponds to a second direction, which is described later, and the x-axis direction corresponds to a third direction, which is described later. In this embodiment, looking along a line of sight from the reformer 13 toward the fuel cell stack 12 along the z-axis direction (first direction) may be referred to as a plan view.

As illustrated in FIG. 1, in the fuel cell module 11, water and raw fuel gas are supplied to the reformer 13. The reformer 13 vaporizes the water. The reformer 13 further reforms the raw fuel gas and steam and generates fuel gas. The fuel gas is supplied to the fuel cell stack 12 together with an oxidant. Air may be used as the oxidant. As illustrated in FIG. 1, the fuel gas may be first supplied to a manifold via a supply pipe 19, and then supplied to fuel cells 120 of the fuel cell stack 12 via the manifold. The fuel cell stack 12 generates power via an electrochemical reaction between the fuel gas and the oxidant. Unreacted fuel gas and unreacted oxidant (hereinafter also referred to as off-gas) in the fuel cell stack 12 may be discharged upward from the fuel cell stack 12. The reformer 13 is heated by the off-gas. In addition, the unreacted fuel gas and the unreacted oxidant may be mixed together while being discharged and combusted in a combustion section 22, and the reformer 13 may be heated by the heat generated by this combustion.

The reformer 13 has a container-like shape with an internal space. The reformer 13 includes a vaporization section 15 to which water and raw fuel gas are supplied, and a reforming section 16 in which a steam reforming reaction is performed. As illustrated in FIG. 2, in this embodiment, the vaporization section 15 and the reforming section 16 are arranged side by side in a certain direction. The direction in which the vaporization section 15 and the reforming section 16 are arranged side by side is illustrated as the second direction in the example in FIG. 2, but this direction may be inclined with respect to the second direction. The vaporization section 15 and the reforming section 16 are separated by, for example, a partition wall 17. Holes through which gas can pass are formed in the partition wall 17. The water vaporized in the vaporization section 15 passes through the partition wall 17 and reacts with the raw fuel gas in the reforming section 16 to generate fuel gas.

The reformer 13 may be shaped like a flat plate on the whole. In this embodiment, the reformer 13 has main surfaces having a rectangular shape with long sides and is shaped like a rectangular parallelepiped the same as or similar to the fuel cell stack 12. The reformer 13 may also have a cylindrical shape with a circular or elliptical cross section.

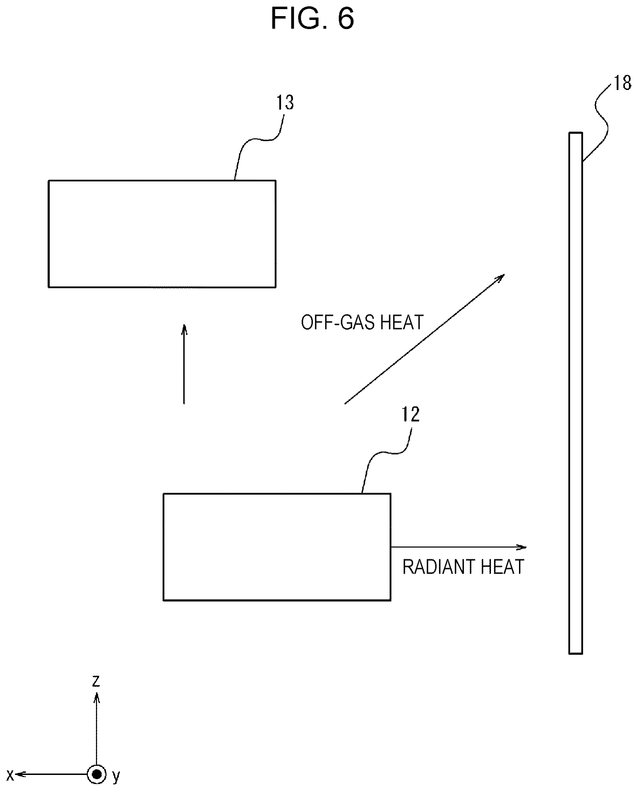

Heretofore, the reformer 13 has often been disposed above the fuel cell stack 12 with the center of the fuel cell stack 12 coinciding with the center of the reformer 13 in plan view so that heat generated by the combustion of the off-gas heats the reformer 13 uniformly. However, the power generation efficiency may change when part of the reformer 13 is particularly heated taking the position of the vaporization section 15 or the reforming section 16 in the reformer 13 into consideration. The fuel cell module 11 may further include an air introduction plate 18 (see FIG. 6) that is provided so that air is efficiently supplied to the fuel cell stack 12. The power generation efficiency may change when part of the reformer 13 or the air introduction plate 18 is preferentially heated. As described below, in the fuel cell module 11 according to this embodiment, the position of the reformer 13 can be easily adjusted using a central axis 13C (see FIG. 3) of the reformer 13 and a central axis 12C (see FIG. 3) of the fuel cell stack 12. As a result, the power generation efficiency can be improved compared to the related art.

FIG. 3 is a diagram illustrating an example of the position of the reformer 13 relative to the fuel cell stack 12. As described above, the reformer 13 and the fuel cell stack 12 have rectangular shapes in plan view, that is, when viewed along a line of sight from the reformer 13 toward the fuel cell stack 12 along the z-axis direction. In plan view, the central axis 13C of the reformer 13 is an axis that extends in the longitudinal direction of the rectangular shape of the reformer 13 and passes through the centers of the short sides of the rectangular shape. In addition, in plan view, the central axis 12C of the fuel cell stack 12 is an axis that extends in the longitudinal direction of the rectangular shape of the fuel cell stack 12 and passes through the centers of the short sides of the rectangular shape. As illustrated in FIG. 3, in the fuel cell module 11 according to this embodiment, the central axis 12C of the fuel cell stack 12 and the central axis 13C of the reformer 13 do not coincide with each other in plan view. With such an arrangement, a difference in the amount of off-gas that hits the bottom part of the reformer 13 from the fuel cell stack 12 and flows around to the side surfaces of the reformer 13 can be created. In the example in FIG. 3, more off-gas can be made to flow around (be sent to) one side surface 132 of the reformer 13 than to another side surface 131. In the example in FIG. 3, the other side surface 132 of the reformer 13 can be heated more than the one side surface 131 of the reformer 13. Here, the central axis 12C and the central axis 13C may be offset from each other at least in the short side direction of the rectangular shapes of the fuel cell stack 12 and the reformer 13 in plan view. In other words, the central axis 12C and the central axis 13C may be offset from each other at least in the third direction (x-axis direction). In addition, the lengths of the long sides of the rectangular shapes of the fuel cell stack 12 and the reformer 13 may be the same as or different from each other in plan view. In addition, the centers of the long sides of the rectangular shapes of the fuel cell stack 12 and the reformer 13 may be offset from each other in the second direction (y-axis direction) in plan view.

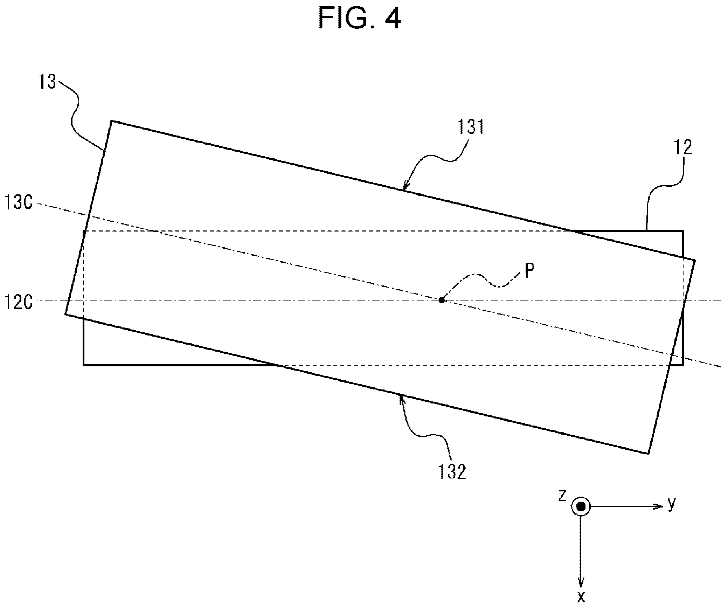

FIG. 4 is a diagram illustrating another example of the position of the reformer 13 relative to the fuel cell stack 12. The central axis 12C of the fuel cell stack 12 is parallel to the second direction (y-axis direction). On the other hand, in plan view, the central axis 13C of the reformer 13 may be inclined toward the third direction (x-axis direction) with respect to the central axis 12C of the fuel cell stack 12. In this case, a finer difference can be created between the amounts of off-gas that flow around to the side surfaces of the reformer 13. In other words, a larger amount of off-gas can be made to flow around to part of the one side surface 131 or part of the other side surface 132. In plan view, the point where the central axis 12C and the central axis 13C intersect is referred to as an intersection point P below. The position of the intersection point P is adjusted in accordance with the part of the reformer 13 that the off-gas is to flow around and heat.

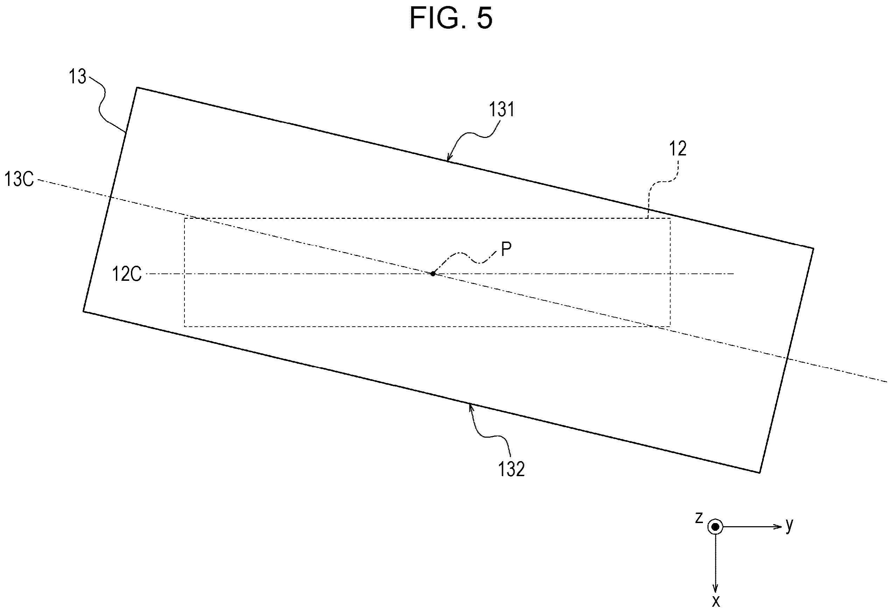

FIG. 5 is a diagram illustrating an example of setting the width of the reformer 13. The central axis 12C of the fuel cell stack 12 is parallel to the second direction (y-axis direction). In plan view, the width of the reformer 13 in the second direction may be set to be larger than the width of the fuel cell stack 12 in the second direction. Preferably, the fuel cell stack 12 is disposed so that the entirety of the fuel cell stack 12 is covered by the reformer 13 in plan view. In this case, most of the off-gas from the fuel cell stack 12 hits the bottom part of the reformer 13. Therefore, the off-gas heats the bottom part of the reformer 13, and the heat can be effectively utilized.

FIG. 6 is a diagram illustrating another example of the position of the reformer 13 relative to the fuel cell stack 12. FIG. 6 illustrates the vertical positional relationship between the reformer 13 and the fuel cell stack 12, and for example, the relationship corresponds to that illustrated in FIG. 3 in plan view. In the example in FIG. 6, the fuel cell module 11 includes the air introduction plate 18 disposed so as to face the reformer 13 and the fuel cell stack 12. In plan view, the central axis 13C of the reformer 13 is farther from the air introduction plate 18 than the central axis 12C of the fuel cell stack 12 is. Therefore, part of the off-gas from the fuel cell stack 12 can directly heat the air introduction plate 18 rather than the reformer 13. In the positional relationship illustrated in FIG. 6, the air introduction plate 18 is heated by the off-gas and the radiant heat of the fuel cell stack 12, and air with a higher temperature is directed to the fuel cell stack 12. The positional relationship illustrated in FIG. 6 may be applied in cases where the power generation efficiency is improved by heating the air introduction plate 18.

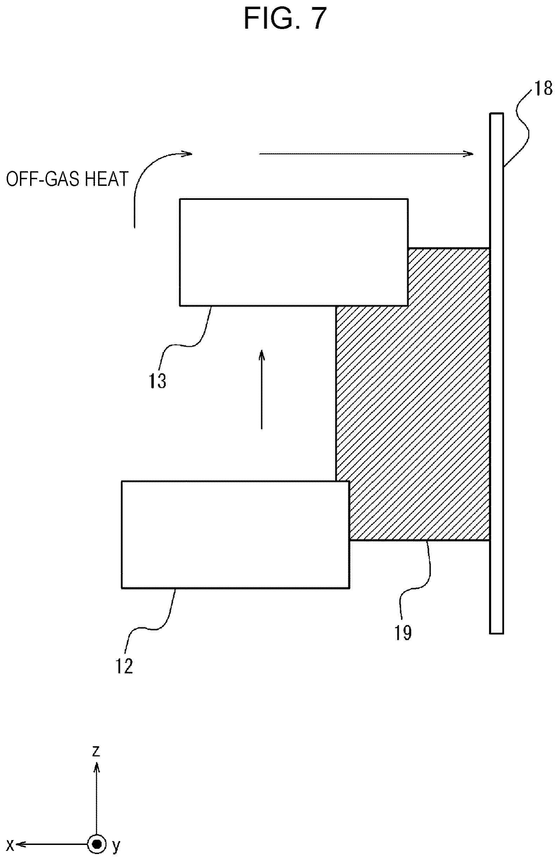

FIG. 7 is a diagram illustrating another example of the position of the reformer 13 relative to the fuel cell stack 12. FIG. 7 illustrates the vertical positional relationship between the reformer 13 and the fuel cell stack 12, and for example, the relationship corresponds to that illustrated in FIG. 3 in plan view. In the example in FIG. 7, the fuel cell module 11 includes the air introduction plate 18, as in FIG. 6. In plan view, the central axis 13C of the reformer 13 is closer to the air introduction plate 18 than the central axis 12C of the fuel cell stack 12 is. Therefore, the off-gas from the fuel cell stack 12 can flow around a side surface and the top part of the reformer 13, sufficiently heat the reformer 13, and then heat a high position on the air introduction plate 18. The power generation efficiency can be improved by sufficiently heating the reformer 13. As illustrated in FIG. 7, the fuel cell module 11 may include a flow impeding member that impedes the flow of air between the reformer 13, the fuel cell stack 12, and the air introduction plate 18. As a specific example, the flow impeding member may be a heat insulator that seals the space between the reformer 13 and the air introduction plate 18. Even if a flow impeding member is present, part of the air introduction plate 18 can be heated by off-gas from the fuel cell stack 12. The positional relationship illustrated in FIG. 7 may be applied when the fuel cell module 11 includes a flow impeding member.

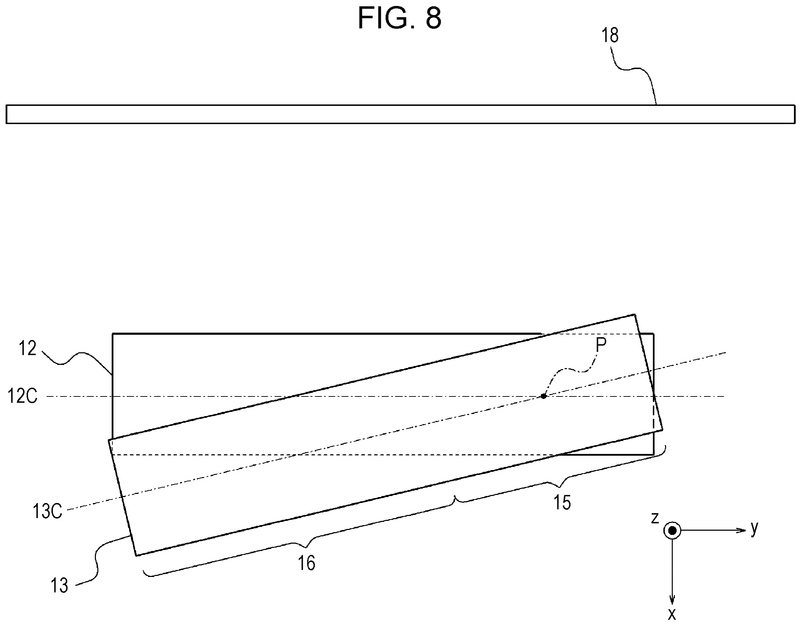

FIG. 8 is a diagram illustrating another example of the position of the reformer 13 relative to the fuel cell stack 12. In the example in FIG. 8, the fuel cell module 11 includes the air introduction plate 18 disposed so as to face the reformer 13 and the fuel cell stack 12. The reformer 13 includes the vaporization section 15 to which water and raw fuel gas are supplied, and a reforming section 16 in which a steam reforming reaction is performed. In plan view, the intersection point P where the central axis 12C and the central axis 13C intersect is contained in the vaporization section 15, and most of the central axis 13C of the reformer 13 is farther from the air introduction plate 18 than the central axis 12C of the fuel cell stack 12 is. In this case, as in the example in FIG. 6, the air introduction plate 18 is easily heated. In addition, the vaporization section 15, which is close to the intersection point P, is exposed to off-gas from the fuel cell stack 12, and therefore there is no decrease in heating of the vaporization section 15. In other words, the air introduction plate 18 can also be heated while sufficiently heating the vaporization section 15 of the reformer 13. In other words, by making the opposing area between the vaporization section 15, in which there is a large endothermic reaction, and the fuel cell stack 12 large, stable vaporization of water can be performed.

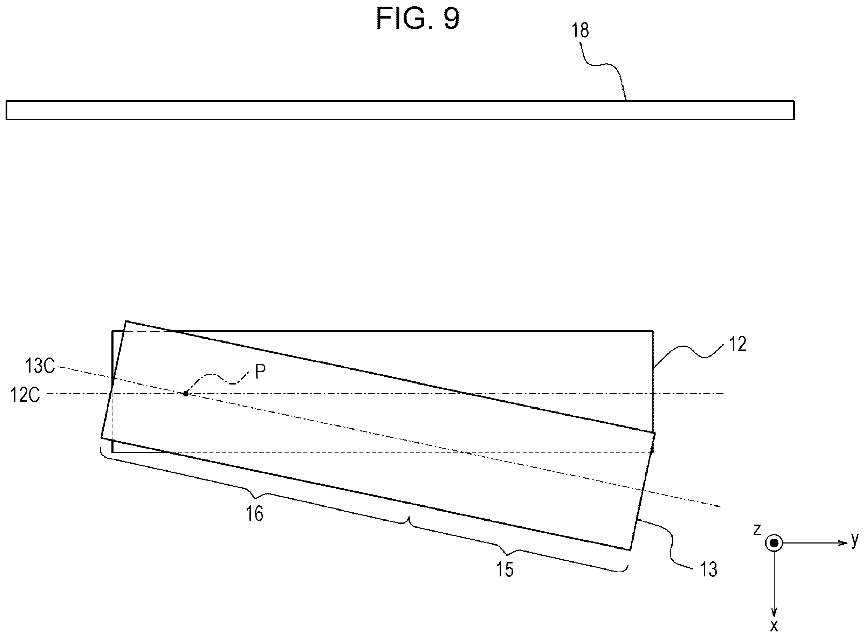

FIG. 9 is a diagram illustrating another example of the position of the reformer 13 relative to the fuel cell stack 12. In the example in FIG. 9, the fuel cell module 11 includes the air introduction plate 18 disposed so as to face the reformer 13 and the fuel cell stack 12. The reformer 13 includes the vaporization section 15 to which water and raw fuel gas are supplied, and a reforming section 16 in which a steam reforming reaction is performed. In plan view, the intersection point P where the central axis 12C and the central axis 13C intersect is contained in the reforming section 16, and most of the central axis 13C of the reformer 13 is farther from the air introduction plate 18 than the central axis 12C of the fuel cell stack 12 is. In this case, as in the example in FIG. 6, the air introduction plate 18 is easily heated. In addition, the reforming section 16, which is close to the intersection point P, is exposed to off-gas from the fuel cell stack 12, and therefore there is no decrease in heating of the reforming section 16. In other words, the air introduction plate 18 can also be heated while sufficiently heating the reforming section 16 of the reformer 13. In other words, since heat is not lost to the vaporization section 15, in which there is a large endothermic reaction, the air introduction plate 18 can be heated more effectively than in FIG. 8.

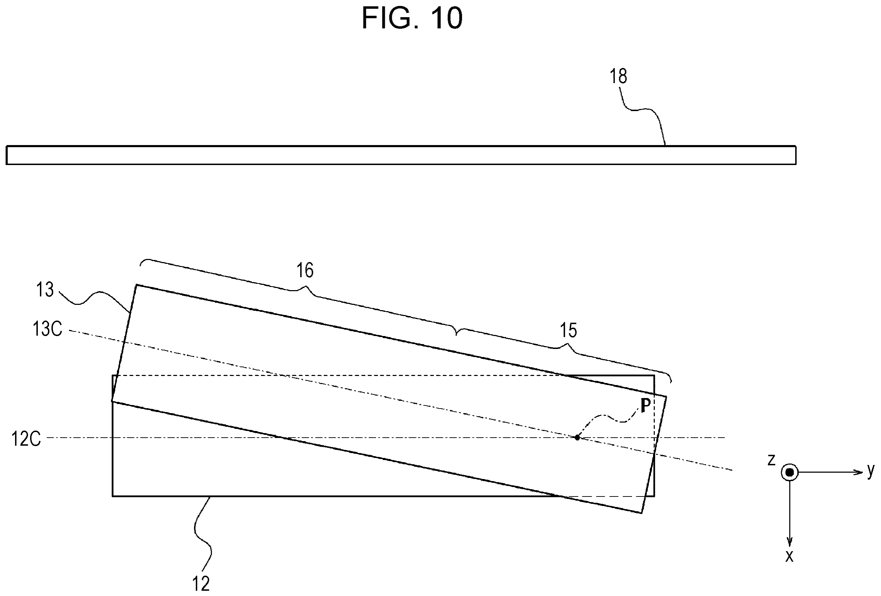

FIG. 10 is a diagram illustrating another example of the position of the reformer 13 relative to the fuel cell stack 12. In the example in FIG. 10, the fuel cell module 11 includes the reformer 13 and the air introduction plate 18 arranged opposite the fuel cell stack 12. The reformer 13 includes the vaporization section 15 to which water and raw fuel gas are supplied, and the reforming section 16 in which a steam reforming reaction is performed. In plan view, the intersection point P between the central axis 12C and the central axis 13C is contained in the vaporization section 15, and most of the central axis 13C of the reformer 13 is closer to the air introduction plate 18 than the central axis 12C of the fuel cell stack 12 is. In this case, as in the example in FIG. 7, the off-gas from the fuel cell stack 12 flows around the side surface and top part of the reformer 13, and after sufficiently heating the reformer 13, a high position on the air introduction plate 18 can also be heated. In addition, the vaporization section 15, which is close to the intersection point P, is exposed to off-gas from the fuel cell stack 12, and therefore there is no decrease in heating of the vaporization section 15. In other words, the reformer 13, particularly the vaporization section 15, can be sufficiently heated. In other words, by making the opposing area between the vaporization section 15, in which there is a large endothermic reaction, and the fuel cell stack 12 large, stable vaporization of water can be performed.

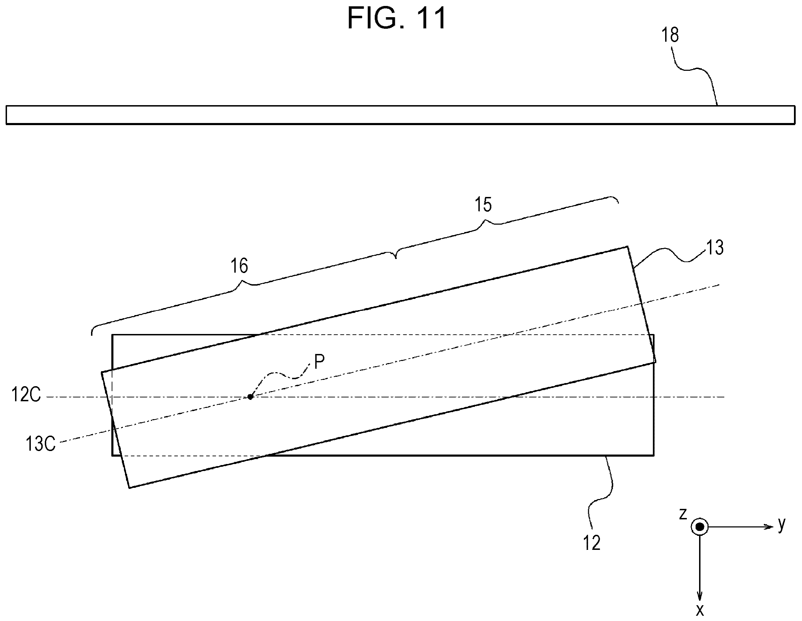

FIG. 11 is a diagram illustrating another example of the position of the reformer 13 relative to the fuel cell stack 12. In the example in FIG. 11, the fuel cell module 11 includes the air introduction plate 18 disposed to face the reformer 13 and the fuel cell stack 12. The reformer 13 includes the vaporization section 15 to which water and raw fuel gas are supplied, and a reforming section 16 in which a steam reforming reaction is performed. In plan view, the intersection point P where the central axis 12C and the central axis 13C intersect is contained in the reforming section 16, and most of the central axis 13C of the reformer 13 is closer to the air introduction plate 18 than the central axis 12C of the fuel cell stack 12 is. In this case, as in the example in FIG. 7, the off-gas from the fuel cell stack 12 flows around the side surface and top part of the reformer 13, and after sufficiently heating the reformer 13, a high position on the air introduction plate 18 can also be heated. In addition, the reforming section 16, which is close to the intersection point P, is exposed to off-gas from the fuel cell stack 12, and therefore there is no decrease in heating of the reforming section 16. In other words, the reformer 13, particularly the reforming section 16, can be sufficiently heated. In other words, since heat is not lost to the vaporization section 15, in which there is a large endothermic reaction, the air introduction plate 18 can be heated more effectively than in FIG. 8.

Here, one of the positional relationships in FIGs. 8 to 11 may be applied so as to maximize the power generation efficiency of the fuel cell module 11, depending on the configuration and performance of the fuel cell module 11.

An auxiliary device having an auxiliary function for operating the fuel cell module may be added to the fuel cell module 11 in order to form a fuel cell device. The auxiliary device may include a processor that instructs starting and stopping of the operation of the fuel cell module.

As described above, in the fuel cell module 11 and fuel cell device according to this embodiment, the position of the reformer 13 can be easily adjusted using the central axis 13C of the reformer 13 and the central axis 12C of the fuel cell stack 12, and power generation efficiency can be improved compared to the related art.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions and so on included in each constituent part can be rearranged in a logically consistent manner, and multiple constituent parts and so on can be combined into one part or divided into multiple parts.

In the present disclosure, "first", "second", and so on are identifiers used to distinguish between such configurations. Regarding the configurations, "first", "second", and so on used to distinguish between the configurations in the present disclosure may be exchanged with each other. Exchanging of the identifiers takes place simultaneously. The identifiers may be deleted. The descriptions of identifiers such as "first" and "second" in the present disclosure are not to be used solely as a basis for interpreting the order of such configurations and so forth.

### REFERENCE SIGNS

- 11: fuel cell module
- 12: fuel cell stack
- 12C: central axis
- 13: reformer
- 13C: central axis
- 15: vaporization section
- 16: reforming section
- 17: partition wall
- 18: air introduction plate
- 19: supply pipe
- 22: combustion section
- 120: fuel cell
- 131: side surface
- 132: side surface

## Claims

1. A fuel cell module comprising:
a fuel cell stack; and
a reformer disposed away from the fuel cell stack in a first direction,
wherein a central axis of the fuel cell stack and a central axis of the reformer do not coincide with each other in a plan view looking along a line of sight from the reformer toward the fuel cell stack along the first direction.

2. The fuel cell module according to claim 1,
wherein the central axis of the fuel cell stack is parallel to a second direction perpendicular to the first direction, and
in the plan view, a width of the reformer in the second direction is greater than a width of the fuel cell stack in the second direction.

3. The fuel cell module according to claim 1, comprising:
an air introduction plate disposed to face the reformer and the fuel cell stack,
wherein in the plan view, the central axis of the reformer is farther from the air introduction plate than the central axis of the fuel cell stack is.

4. The fuel cell module according to claim 1, comprising:
an air introduction plate disposed to face the reformer and the fuel cell stack,
wherein in the plan view, the central axis of the reformer is closer to the air introduction plate than the central axis of the fuel cell stack is.

5. The fuel cell module according to claim 4, comprising:
a flow impeding member that impedes flow of air between the reformer, the fuel cell stack, and the air introduction plate.

6. The fuel cell module according to claim 1,
wherein the central axis of the fuel cell stack is parallel to a second direction perpendicular to the first direction, and
in the plan view, the central axis of the reformer is inclined toward a third direction with respect to the central axis of the fuel cell stack, the third direction being perpendicular to the first direction and the second direction.

7. The fuel cell module according to claim 6, comprising:
an air introduction plate disposed to face the reformer and the fuel cell stack,
wherein the reformer includes a vaporization section to which water and raw fuel gas are supplied, and a reforming section in which a steam reforming reaction is performed, and
in the plan view, an intersection point between the central axis of the reformer and the central axis of the fuel cell stack is contained in the vaporization section, and most of the central axis of the reformer is farther from the air introduction plate than the central axis of the fuel cell stack is.

8. The fuel cell module according to claim 6, comprising:
an air introduction plate disposed to face the reformer and the fuel cell stack,
wherein the reformer includes a vaporization section to which water and raw fuel gas are supplied, and a reforming section in which a steam reforming reaction is performed, and
in the plan view, an intersection point between the central axis of the reformer and the central axis of the fuel cell stack is contained in the reforming section, and most of the central axis of the reformer is farther from the air introduction plate than the central axis of the fuel cell stack is.

9. The fuel cell module according to claim 6, comprising:
an air introduction plate disposed to face the reformer and the fuel cell stack,
wherein the reformer includes a vaporization section to which water and raw fuel gas are supplied, and a reforming section in which a steam reforming reaction is performed, and
in the plan view, an intersection point between the central axis of the reformer and the central axis of the fuel cell stack is contained in the vaporization section, and most of the central axis of the reformer is closer to the air introduction plate than the central axis of the fuel cell stack is.

10. The fuel cell module according to claim 6, comprising:
an air introduction plate disposed to face the reformer and the fuel cell stack,
wherein the reformer includes a vaporization section to which water and raw fuel gas are supplied, and a reforming section in which a steam reforming reaction is performed, and
in the plan view, an intersection point between the central axis of the reformer and the central axis of the fuel cell stack is contained in the reforming section, and most of the central axis of the reformer is closer to the air introduction plate than the central axis of the fuel cell stack is.

11. A fuel cell device comprising:
the fuel cell module according to any one of claims 1 to 10; and
an auxiliary device having an auxiliary function for operating the fuel cell module.
